# EUROPÄISCHE PATENTSCHRIFT

(11) **EP 2 470 417 B1**
(45) Veröffentlichungstag und Bekanntmachung des Hinweises auf die Patenterteilung: **30.09.2015**
(21) Anmeldenummer: 10750050.6
(22) Anmeldetag: 24.08.2010
(51) Int. Cl.: B62M 11/14, B62M 6/55, B62M 6/50, B62M 1/36, B62M 1/14

(54) **ANTRIEBSEINHEIT**
DRIVE UNIT
UNITÉ D'ENTRAÎNEMENT

(30) Priorität: 28.08.2009 DE 102009039635; 31.08.2009 DE 102009039333; 15.03.2010 DE 102010011523
(43) Veröffentlichungstag der Anmeldung: 04.07.2012
(73) Patentinhaber: Joy Industrial Co., Ltd., Taichung Hsien (TW)
(72) Erfinder: FELSL, Andreas, 83707 Bad Wiessee (DE); LOEFFL, Florian, 82024 Taufkirchen (DE)
(74) Vertreter: Schöneborn, Holger
(86) Internationale Anmeldenummer: PCT/EP2010/005180
(87) Internationale Veröffentlichungsnummer: WO 2011/023366

(56) Entgegenhaltungen:
- CN-A- 101 423 102
- US-A- 5 915 493
- US-B1- 6 196 347

## Beschreibung

Die Erfindung betrifft ein Fahrrad mit einer Antriebseinheit für muskelbetriebene Fahrzeuge mit Drehmomenterfassung.

Bei Antriebseinheiten für muskelbetriebene Fahrzeuge - insbesondere für Fahrräder - gibt es verschiedene Ansätze zur Drehmomentmessung an einer musketbetriebenen Kurbelwelle. Diese Drehmomentmessung kann z.B. zur Leistungsmessung eines Fahrers oder zur Steuerung eines Hilfsmotors des Fahrzeugs dienen.

Aus dem Stand der Technik sind Antriebseinheiten mit Drehmomentmessung an rotierenden bzw. bewegten Teilen bekannt. So kann eine rotierende drehmomentbeaufschlagte Hülse magnetdotiert sein und ihre Verformung auf Grund des von ihr übertragenen Drehmomentes wird induktiv gemessen. Oder die Drehmomenterfassung erfolgt über eine Messung einer Spannung einer umlaufenden Kette, die zur Koppelung einer Kurbelwelle und eines Antriebsrades des Fahrzeugs dient.

Nachteilig an derartiger Drehmomenterfassung an rotierenden bzw. bewegten Teilen ist der vorrichtungstechnische Aufwand.

Dem entsprechend ist auch bekannt, eine Durchbiegung einer ruhenden Achse des Antriebsrades zu erfassen.

Nachteilig an derartigen Antriebseinheiten mit Drehmomenterfassung ist der Einfluss von Störgrößen auf Grund weiterer insbesondere wechselnder Belastungen der Achse. Derartige wechselnde Belastungen können z.B. dadurch entstehen, dass ein zuvor auf dem Sattel sitzender Fahrer sich vom Sattel erhebt und im Stehen weiter fährt. Dokumente US 5915493 und EP 0968912 beschreiben ein Fahrrad gemäß dem Oberbegriff von Anspruch 1.

Dem gegenüber liegt der Erfindung die Aufgabe zu Grunde, ein Fahrrad mit einer Antriebseinheit mit Drehmomenterfassung zu schaffen, die vorrichtungstechnisch einfach und dabei weitgehend frei von Fremdeinflüssen ist, die das Messergebnis verfälschen.

Diese Aufgabe wird gelöst durch ein Fahrrad mit eine Antriebseinheit mit den Merkmalen des Patentanspruchs 1.

Das erfindungsgemäße muskelkraftbetriebene Fahrrad mit einer Antriebseinheit hat eine in einem Kurbelgehäuse oder in einem Rahmen gelagerten Kurbelwelle, an der zumindest eine Kurbel zum Übertragen von Muskelkraft eines Fahrers auf ein Antriebsrad des Fahrzeugs befestigt ist. Weiterhin ist eine Getriebeeinheit bzw. ein Getriebe vorgesehen, die bzw. das im Kraftfluss von der Kurbelwelle zu einem mit dem Antriebsrad des Fahrzeugs gekoppelten Abtriebsrad der Getriebeeinheit bzw. des Getriebes angeordnet ist. Erfindungsgemäß ist ein im Wesentlichen ruhendes bzw. rahmenfestes Teil der Getriebeeinheit bzw. des Getriebes zur Bestimmung eines Gesamtdrehmoments der Kurbelwelle am Kurbelgehäuse oder am Rahmen abgestützt. Die erfindungsgemäße Antriebseinheit ist vorrichtungstechnisch einfach und dabei weitgehend frei von Fremdeinflüssen, die das Messergebnis verfälschen.

Weitere vorteilhafte Ausgestaltungen der Erfindung sind in den abhängigen Patentansprüchen beschrieben.

Bei der Erfindung ist das Fahrzeug ein Fahrrad, wobei das Kurbelgehäuse ein Tretlagergehäuse ist, und wobei an der Kurbelwelle zwei Kurbeln befestigt sind. Dabei wird die Muskelkraft von Beinen des Fahrers erzeugt. Bei derartigen Fahrzeugen ist das Drehmoment z.B. zur Leistungsmessung des Fahrers oder zur Steuerung eines Hilfsmotors des Fahrzeugs von Interesse.

Vorzugsweise ist das Abtriebsrad ein Zahnrad oder ein Kettenrad, das über eine Kette an das Antriebsrad des Fahrzeugs gekoppelt ist.

Um den Fertigungs- und Montageaufwand für die erfindungsgemäße Antriebseinheit zu minimieren wird das im Wesentlichen ruhende Teil über einen Drehmomentsensor an einem Standard-Tretlagergehäuse abgestützt. Damit kann die erfindungsgemäße Antriebseinheit incl. Drehmomentsensor auch nachträglich an ein bereits gefertigtes Fahrrad mit entsprechendem Standard-Tretlagergehäuse montiert werden.

Dabei wird es bevorzugt, wenn der Drehmomentsensor über den International Standard Chain Guide Mount (ISCG) am Standard-Tretlagergehäuse befestigt ist.

Als Standard-Tretlager wird ein International Standard for Bottom Bracket Shells (BB30) oder BSA-Lager angesehen.

Wenn eine Längsachse der Kurbelwelle mit einer Mittelachse des Getriebes oder mit einer Längsachse einer mit dem Abtriebsrad verbundenen Abtriebswelle des Getriebes zusammen fällt, ergibt sich eine weitgehend rotationssymmetrische Anordnung mit entsprechender ästhetischer Anmutung.

Bei einer bevorzugten Weiterbildung hat der Drehmomentsensor eine etwa konzentrisch zur Kurbelwelle angeordnete Hülse, an der ein Dehnungsmessstreifen oder ein Piezoelement befestig ist. Dabei ist die Hülse über den International Standard Chain Guide Mount (ISCG) am Standard-Tretlagergehäuse befestigt.

Wenn das Getriebe ein Planetengetriebe mit einem Hohlrad, einem Sonnenrad, einem Planetenträger und daran gelagerten Planeten ist, und wenn das Abtriebsrad am Hohlrad befestigt ist, ist ein gegenüber dem Stand der Technik kleineres Abtriebrad möglich.

Gemäß einer ersten Variante ist das im Wesentlichen ruhende bzw. rahmenfeste Teil das Sonnenrad, während der Planetenträger direkt oder indirekt an der Kurbelwelle befestigt ist.

Gemäß einer zweiten Variante ist das im Wesentlichen ruhende bzw. rahmenfeste Teil der Planetenträger, während das Sonnenrad direkt oder indirekt an der Kurbelwelle befestigt ist.

Eine bevorzugte Weiterbildung der Antriebseinheit für ein Fahrzeug hat eine in einem Kurbelgehäuse oder in einem Rahmen gelagerte Kurbelwelle, an der zwei Kurbeln befestigt sind, wobei zwischen den beiden Kurbeln ein Zahnrad angeordnet ist, über das Muskelkraft eines Fahrers an ein Antriebsrad des Fahrzeugs übertragbar ist. Dabei ist ein Motor vorgesehen, von dem in Abhängigkeit eines Gesamtdrehmoments der Kurbelwelle ein Drehmoment an die Kurbelwelle übertragen wird. Weiterhin ist ein Planetengetriebe mit einem Hohlrad, einem Sonnenrad, einem Planetenträger und daran gelagerte Planeten vorgesehen, wobei das Zahnrad am Außenumfang des Hohlrades befestigt ist. Dabei ist entweder der Planetenträger oder das Sonnenrad an der Kurbelwelle befestigt. Entsprechend ist das Sonnenrad oder der Planetenträger am Kurbelgehäuse bzw. am Rahmen befestigt. Damit lässt sich das Drehmoment der Kurbelwelle durch die relative Position eines stehenden bzw. ruhenden Teils (Sonnenrad oder Planetenträger) messen.

Es wird besonders bevorzugt, wenn zumindest ein Drehmomentsensor vorgesehen ist, der in Wirkverbindung einerseits mit dem Kurbelgehäuse bzw. mit dem Rahmen und andererseits mit dem Sonnenrad oder mit dem Planetenträger steht. Über diesen Drehmomentsensor ist das Gesamtdrehmoment der Kurbelwelle erfassbar.

Je nach Ausführungsbeispiel kann das Sonnenrad oder der Planetenträger auf der Kurbelwelle gelagert sein.

Bei einer bevorzugten Weiterbildung sind das Zahnrad und das Planetengetriebe zwischen dem Kurbelgehäuse und der ersten Kurbel angeordnet, während der Motor zwischen der zweiten Kurbel und dem Kurbelgehäuse angeordnet ist.

Vorzugsweise ist ein Gehäuse des Motors - z.B. eines Elektromotors - am Kurbelgehäuse bzw. am Rahmen des Fahrzeugs befestigt.

Ein Getriebe kann im Drehmomentfluss zwischen dem Motor und der Kurbelwelle vorgesehen und im Gehäuse des Motors aufgenommen sein. Damit sind auch Motoren verwendbar, deren Nenndrehzahlen von dem Drehzahlbereich der Kurbelwelle abweichen.

Bei einem besonders bevorzugten Ausführungsbeispiel ist das Fahrzeug ein Fahrrad, wobei die Muskelkraft von Beinen des Fahrers erzeugt wird, und wobei jede Kurbel ein Pedal hat, und wobei das Kurbelgehäuse ein Tretlagergehäuse ist.

Oder das Fahrzeug ist ein Handbike, wobei die Muskelkraft von Armen des Fahrers erzeugt wird, und wobei jede Kurbel einen Handgriff hat.

Im Folgenden werden anhand der Figuren verschiede Ausführungsbeispiele der Erfindung detailliert beschrieben. Es zeigen:
Figur 1 ein erstes Ausführungsbeispiel einer erfindungsgemäßen Antriebseinheit in einer schematischen Darstellung; und
Figur 2 ein zweites Ausführungsbeispiel einer erfindungsgemäßen Antriebseinheit in einer geschnittenen Darstellung.

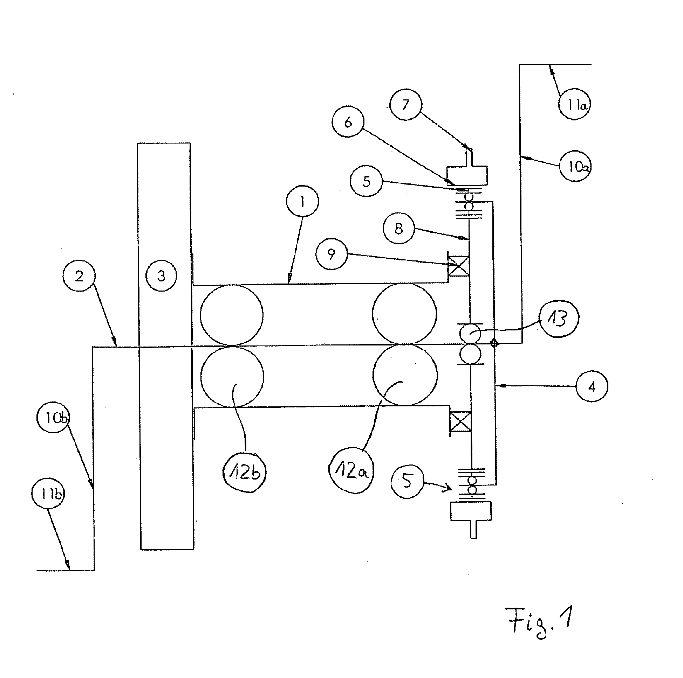

Die Figur 1 zeigt ein erstes Ausführungsbeispiel einer erfindungsgemäßen Antriebseinheit.

In einem Tretlagergehäuse 1, das fest mit dem Rahmen eines (nicht näher gezeigten) Fahrrades verbunden ist, ist über zwei Lager 12a, 12b eine Kurbelwelle 2 gelagert, an deren Enden jeweils eine Kurbel 10a, 10b befestigt ist. An jeder Kurbel 10a, 10b ist ein Pedal 11 a, 11 b drehbar angeordnet, über das die Kurbeln 10a, 10b und damit die Kurbelwelle 2 von einem Fahrer des Fahrrades angetrieben werden. Dieser Antrieb erfolgt gemäß dem Stand der Technik über ein Kettenrad bzw. Zahnrad 7, das über eine Kette ein Hinterrad des Fahrrades antreibt.

Erfindungsgemäß ist das Kettenrad bzw. Zahnrad 7 nicht fest mit der Kurbelwelle 2 verbunden, sondern wird über ein Planetengetriebe angetrieben. Dabei treibt die Kurbelwelle 2 einen damit fest verbundenen Planetenträger 4 an, an dessen Umfang mehrere Planetenräder angeordnet sind, von denen in der Figur zwei Planetenräder 5 gezeigt sind.

Die Planetenräder 5 umlaufen ein ruhendes Sonnenrad 8, das über zumindest ein Lager 13 gegenüber der drehenden Kurbelwelle 2 gelagert ist. Dabei ist das Sonnenrad 8 über Drehmomentsensoren 9 an dem Tretlagergehäuse 1 bzw. am Rahmen des Fahrrades befestigt, wobei ein Drehmoment des Sonnenrades 8 über seine Verdrehung gegenüber dem Tretlagergehäuse 1 von den Drehmomentsensoren 9 erfasst werden kann. Damit ist das Drehmoment der Kurbelwelle 2 erfindungsgemäß über ruhende Teile (Sonnrad 8 und Tretlagergehäuse 1) messbar.

Ein Hohlrad 6 des Planetengetriebes ist im Innern des Kettenrades bzw. Zahnrades 7 angeordnet. Somit laufen bei einer Tret- bzw. Kurbelbewegung des Fahrers mit der Kurbelwelle 2 der Planetenträger 4 und die Planetenräder 5 um und treiben über das Hohlrad 6 das Kettenrad bzw. Zahnrad 7 an.

Bei zunehmender Last bzw. zunehmendem Drehmoment wird ein Elektromotor 3 zugeschaltet, der vergleichsweise flach ausgebildet ist und auf der dem Planetengetriebe abgewandten Seite des Tretlagergehäuses 1 zwischen diesem und der zweiten Kurbel 10b angeordnet ist. Dabei sind verschiedene Kennlinien des Elektromotors 3 möglich, so kann z.B. die Zuschaltung stufenlos proportional oder auch über andersartige Kennlinien erfolgen.

Im Gehäuse des Elektromotors 3 kann ein (nicht gezeigtes) Getriebe integriert sein, insbesondere um prinzipielle Drehzahlunterschiede zwischen dem Elektromotor 3 und der Kurbelwelle 2 auszugleichen. Somit treibt der Elektromotor 3 die Kurbelwelle 2 entweder direkt oder indirekt über das Getriebe an.

Abweichend vom ersten Ausführungsbeispiel kann statt des Sonnenrades 8 der Planetenträger 4 am Kurbelgehäuse 1 oder am Rahmen befestigt sein. Dementsprechend wird der Drehmomentsensor 9, der einerseits mit dem Kurbelgehäuse 1 bzw. mit dem Rahmen verbunden ist, andererseits mit dem Planetenträger 4 verbunden. Dadurch kann ebenfalls das Drehmoment der Kurbelwelle 2 über ruhende Teile erfasst werden und der Elektromotor 3 dementsprechend geregelt werden.

Somit kann entsprechend der vorliegenden Erfindung folgende Struktur vorgesehen sein:
Auf der Kurbelwelle 2, die im Tretlagergehäuse 1 gelagert ist sitzt auf der einen Seite des Tretlagergehäuses 1 eine Motor oder Motor-Getriebe-Einheit 3, sowie auf der anderen Seite ein Planetengetriebe. Beidseitig sind Kurbeln 10 und Pedale 11 angebracht. Der Planetenträger 4 ist fest mit der Kurbelwelle 2 verbunden. Das Sonnenrad 8, das auf der Kurbelwelle 2 gelagert sein kann, ist über eine Drehmomentstütze 9 fest mit dem Tretlagergehäuse 1 verbunden. An der Drehmomentstütze 9 sind Sensoren zur Messung des Drehmoments am Sonnenrad 8 angebracht. Über das Hohlrad 6 wird die gesamte Antriebsleistung vom Motor und Pedaleur an das Kettenrad bzw. Zahnrad 7 abgegeben.

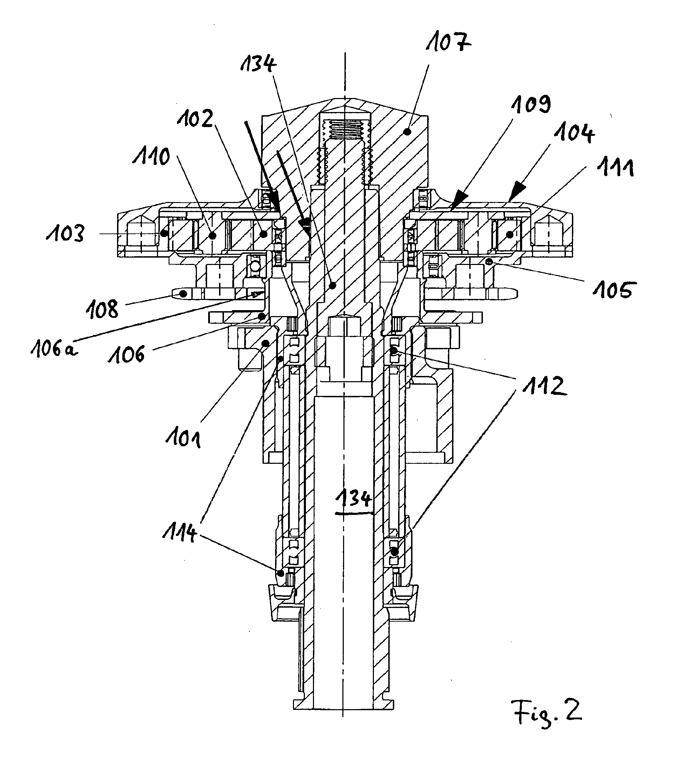

Figur 2 zeigt ein zweites Ausführungsbeispiel einer erfindungsgemäßen Antriebseinheit in einer geschnittenen Darstellung.

An einem nicht näher gezeigten Rahmen eines Fahrrades ist ein Tretlagergehäuse 101 mit ISCG-Aufnahme befestigt. Darin ist eine Tretlageranordnung mit zwei Lagern 112 vorgesehen, die jeweils über eine Lagerschale 114 im Tretlagergehäuse 101 aufgenommen sind. Über diese Tretlageranordnung 112, 114 ist eine Kurbelwelle 134 drehbar im Tretlagergehäuse 101 gelagert, die eine durchgehende Hohlwelle und eine Vollwelle aufweist. Die Vollwelle ist in einem (in Figur 2) oberen Abschnitt der Hohlwelle aufgenommen und dort befestigt. An beiden Endabschnitten der Kurbelwelle 134 ist jeweils eine Kurbel befestigt, von der in Figur 2 nur ein zentraler Abschnitt einer Kurbel 107 dargestellt ist.

Am Außenumfang des zentralen Abschnitts der Kurbel 107 ist ein Planetengetriebe angeordnet. Es hat ein Gehäuse, das aus einem (in Figur 2) oberen Gehäuseabschnitt 104 und einem unteren Gehäuseabschnitt 105 besteht. Einstückig mit dem Gehäuse 104, 105 ist ein Hohlrad 103 gebildet, entlang dessen Innenumfang vier Planeten bzw. Planetenräder verteilt sind, von denen in Figur 2 nur zwei Planetenräder 111 gezeigt sind. Sie sind über entsprechende Planetenachsen 110 drehbar an einem Planetenträger 109 aufgenommen und gelagert, wobei der Planetenträger 109 über die Kurbel 107 drehfest mit der Kurbelwelle 134 verbunden ist.

Ein Sonnenrad 102, das an den jeweiligen Innenseiten der Planetenräder 111 anliegt und an dem die Planetenräder 111 kämmend abrollen, ist über eine Hülse 106a eines Drehmomentsensors 106 weitgehend drehfest mit dem Tretlagergehäuse 101 verbunden. Dabei ist eine drehfeste Verbindung des Drehmomentsensors 106 mit dem Tretlagergehäuse 101 gemäß dem "International Standard Chain Guide Mount" (ISCG) vorgesehen.

Der Gehäuseabschnitt 104 des Planetengetriebes ist über ein Lager drehbar an der Kurbel 107 gelagert, während der Gehäuseabschnitt 105 über ein Lager drehbar an einem zwischen der Sonne 102 und der Hülse 106a vorgesehenen Verbindungsabschnitt gelagert ist.

An dem durch einen Pfeil gekennzeichneten Berührbereich zwischen der Hohlwelle der Kurbelwelle 134 und der Kurbel 107 ist eine Welle-Nabe-Verbindung vorgesehen, wie auch zwischen der Kurbel 107 und dem Planetenträger 109 eine durch einen Pfeil gekennzeichnete Welle-Nabe-Verbindung vorgesehen ist.

Am (in Figur 2) unteren Gehäuseabschnitt 105 des Planetengetriebes ist ein Kettenblatt bzw. Kettenrad 108 befestigt, das über eine (nicht gezeigte) Kette mit einem (ebenfalls nicht gezeigten) Antriebsrad bzw. Hinterrad des Fahrrades gekoppelt ist.

Im Folgenden wird die Funktion des zweiten Ausführungsbeispiels die Erfindung gemäß Figur 2 erläutert. Im Kraftfluss von der Kurbel 107 zum Kettenrad 108 ist das Planetengetriebe angeordnet, das ein Drehmoment und eine Drehzahl der Kurbelwelle 134 in ein Drehmoment und eine Drehzahl des Kettenrades 108 wandelt. Dabei drehen sich der Planetenträger 109 und die Planetenachsen 110 mit der Kurbelwelle 134. Da das Sonnenrad 102 über den Drehmomentsensor 106 am Tretlagergehäuse 101 im Wesentlichen rahmenfest gehalten wird, nehmen die Planetenräder 111 über das Hohlrad 101 das Gehäuse 104, 105 und somit das Kettenrad 108 mit.

In Abhängigkeit des an der Kurbelwelle 134 eingeleiteten Drehmoments entsteht dabei ein Drehmoment am Sonnenrad 102, das zu einer Torsion der Hülse 106a führt, die am Tretlagergehäuse 101 befestigt ist. Diese Befestigung entspricht dem "International Standard Chain Guide Mount" (ISCG). Die Torsion der stehenden Hülse 106a wird vorrichtungstechnisch einfach eine einem stehenden Teil des Getriebes und frei von Störgrößen über Dehnungsmessstreifen oder Piezoelemente erfasst.

Das Planetengetriebe mit dem daran befestigten Kettenrad 108 und dem Drehmomentsensor 106 kann als Modul mit vergleichsweise geringem Montageaufwand an ein bestehendes Tretlagergehäuse 101 mit ISCG-Aufnahme angeschraubt werden.

Abweichend von den gezeigten Ausführungsbeispielen kann die erfindungsgemäße Drehmomenterfassung an einem weitgehend ruhenden bzw. stehenden Getriebeteil auch an einem einfachen Stirnradgetriebe an einer Lagerung eines Stirnrades bzw. seiner Welle geschehen.

Offenbart ist eine Antriebseinheit für ein muskelkraftbetriebenes Fahrzeug mit einer in einem Kurbelgehäuse oder in einem Rahmen gelagerten Kurbelwelle, an der zumindest eine Kurbel zum Übertragen von Muskelkraft eines Fahrers auf ein Antriebsrad des Fahrzeugs befestigt ist. Dabei ist ein Getriebe vorgesehen, das im Kraftfluss von der Kurbelwelle zu einem mit dem Antriebsrad des Fahrzeugs gekoppelten Abtriebsrad des Getriebes angeordnet ist. Erfindungsgemäß ist ein im Wesentlichen ruhendes Teil des Getriebes zur Bestimmung eines Gesamtdrehmoments der Kurbelwelle am Kurbelgehäuse oder am Rahmen abgestützt.

### Bezugszeichenliste

- 1; 101: Tretlagergehäuse
- 2; 134: Kurbelwelle
- 3: Elektromotor
- 4; 109: Planetenträger
- 5; 111: Planetenrad
- 6; 103: Hohlrad
- 7: Zahnrad
- 8; 102: Sonnenrad
- 9; 106: Drehmomentsensor
- 10a, 10b; 107: Kurbel
- 11a, 11b: Pedal
- 12a, 12b, 13; 112: Lager
- 104, 105: Gehäuseabschnitt
- 106a: Hülse
- 108: Kettenrad
- 110: Planentenachse
- 114: Lagerschale

## Patentansprüche

1. Muskelkraftbetriebenes Fahrrad mit einer Antriebseinheit mit einer in einem Tretlagergehäuse (1; 101) oder in einem Rahmen gelagerten Kurbelwelle (2; 134), an der zwei Kurbeln (10a, 10b; 107) zum Übertragen von Muskelkraft eines Fahrers auf ein Antriebsrad des Fahrrades befestigt sind, und mit einem Getriebe, das im Kraftfluss von der Kurbelwelle (2; 134) zu einem mit dem Antriebsrad gekoppelten Abtriebsrad (7; 108) des Getriebes angeordnet ist, **dadurch gekennzeichnet, dass** ein im Wesentlichen ruhendes Teil (8; 102) des Getriebes zur Bestimmung eines Gesamtdrehmoments der Kurbelwelle (2; 134) über einen Drehmomentsensor (9; 106) an einem Standard-Tretlagergehäuse (1; 101) abgestützt ist, das dem BSA-Standard oder dem International Standard for Bottom Bracket Shells (BB30) entspricht.

2. Fahrrad nach Anspruch 1, wobei das Abtriebsrad ein Zahnrad (7) oder ein Kettenrad (108) ist, das über eine Kette an das Antriebsrad des Fahrrades gekoppelt ist.

3. Fahrrad nach Anspruch 1, wobei der Drehmomentsensor (106) über den International Standard Chain Guide Mount (ISCG) am Standard-Tretlager-gehäuse (101) befestigt ist.

4. Fahrrad nach einem der vorhergehenden Ansprüche, wobei eine Längsachse der Kurbelwelle (2; 134) mit einer Mittelachse des Getriebes zusammen fällt.

5. Fahrrad nach Anspruch 1 oder nach einem der Ansprüche 3 bis 4, wobei der Drehmomentsensor (106) eine etwa konzentrisch zur Kurbelwelle (134) angeordnete Hülse (106a) hat, an der ein Dehnungsmessstreifen oder ein Piezoelement befestig ist, wobei die Hülse (106a) über den International Standard Chain Guide Mount (ISCG) am Standard-Tretlagergehäuse (101) befestigt ist.

6. Fahrrad nach einem der vorhergehenden Ansprüche, wobei das Getriebe ein Planetengetriebe (4, 5, 6, 8; 102, 103, 109, 111) mit einem Hohlrad (6; 103), einem Sonnenrad (8; 102), einem Planetenträger (4; 109) und daran gelagerten Planeten (5; 111) ist, und wobei das Abtriebsrad (7; 108) am Hohlrad (6; 103) befestigt ist.

7. Fahrrad nach Anspruch 6, wobei das im Wesentlichen ruhende Teil das Sonnenrad (8; 102) ist, und wobei der Planetenträger (4; 109) direkt oder indirekt an der Kurbelwelle (2; 134) befestigt ist.

8. Fahrrad nach Anspruch 6, wobei das im Wesentlichen ruhende Teil der Planetenträger ist, und wobei das Sonnenrad direkt oder indirekt an der Kurbelwelle befestigt ist.

9. Fahrrad nach Anspruch 1, wobei an der Kurbelwelle (2) zwei Kurbeln (10a, 10b) befestigt sind, zwischen denen ein Zahnrad (7) angeordnet ist, über das die Muskelkraft des Fahrers an das Antriebsrad des Fahrrades übertragbar ist, mit einem Motor (3), über den in Abhängigkeit des Gesamtdrehmoments der Kurbelwelle (2) ein Drehmoment an die Kurbelwelle (2) übertragbar ist, wobei das Getriebe ein Planetengetriebe ist, das ein Hohlrad (6) ein Sonnenrad (8), einen Planetenträger (4) und daran gelagerte Planeten (5) hat, wobei das Zahnrad (7) am Außenumfang des Hohlrades (6), der Planetenträger (4) an der Kurbelwelle (2) und das Sonnenrad (8) am Kurbelgehäuse (1) oder am Rahmen befestigt sind.

10. Fahrrad nach Anspruch 1, wobei an der Kurbelwelle zwei Kurbeln befestigt sind, zwischen denen ein Zahnrad angeordnet ist, über das die Muskelkraft des Fahrers an das Antriebsrad des Fahrrades übertragbar ist, mit einem Motor, über den in Abhängigkeit des Gesamtdrehmoments der Kurbelwelle ein Drehmoment an die Kurbelwelle übertragbar ist, wobei das Getriebe ein Planetengetriebe ist, das ein Hohlrad, ein Sonnenrad, einen Planetenträger und daran gelagerte Planeten hat, wobei das Zahnrad am Außenumfang des Hohlrades, das Sonnenrad an der Kurbelwelle und der Planetenträger am Kurbelgehäuse oder am Rahmen befestigt sind.

11. Fahrrad nach Patentanspruch 9, mit zumindest einem Drehmomentsensor (9), der in Wirkverbindung mit dem Kurbelgehäuse (1) oder mit dem Rahmen und mit dem Sonnenrad (8) steht, und über den das Gesamtdrehmoment der Kurbelwelle (2) erfassbar ist.

12. Fahrrad nach Patentanspruch 10, mit zumindest einem Drehmomentsensor, der in Wirkverbindung mit dem Kurbelgehäuse oder mit dem Rahmen und mit dem Planetenträger steht, und über den das Gesamtdrehmoment der Kurbelwelle erfassbar ist.

13. Fahrrad nach Patentanspruch 9 oder 11, wobei das Sonnenrad (8) auf der Kurbelwelle (2) gelagert ist.

14. Fahrrad nach Patentanspruch 10 oder 12, wobei der Planetenträger auf der Kurbelwelle gelagert ist.

15. Fahrrad nach einem der Patentansprüche 9 bis 14, wobei das Zahnrad (7) und das Planetengetriebe zwischen dem Kurbelgehäuse (1) und einer ersten Kurbel (10a) angeordnet sind, und wobei der Motor (3) zwischen einer zweiten Kurbel (10b) und dem Kurbelgehäuse (1) angeordnet ist.

16. Fahrrad nach einem der Patentansprüche 9 bis 15, wobei der Motor eine Elektromotor (3) ist, wobei ein Gehäuse des Elektromotors (3) am Kurbelgehäuse (1) oder am Rahmen des Fahrrades befestigt ist.

17. Fahrrad nach Patentanspruch 16, wobei dem Motor (3) ein Getriebe zugeordnet ist, das im Gehäuse des Motors (3) aufgenommen ist.

## Claims

1. A muscle-powered bicycle comprising a drive unit having a crankshaft (2; 134) mounted in a bottom bracket shell (1; 101) or in a frame and having two cranks (10a, 10b; 107) fastened thereto for transferring the muscle power of a cyclist to a drive wheel of the bicycle, and a gear mechanism arranged in the power train from the crankshaft (2; 134) to a driven gear (7; 108) of the gear mechanism coupled to the drive wheel, **characterized in that** a substantially stationary part (8; 102) of the gear mechanism for determining a total torque of the crankshaft (2; 134) is supported via a torque sensor (9; 106) on a standard bottom bracket shell (1; 101) corresponding to the BSA standard or to the International Standard for Bottom Bracket Shells (BB30).

2. The bicycle according to claim 1, wherein the driven gear is a toothed wheel (7) or a chain wheel (108) coupled to the drive wheel of the bicycle via a chain.

3. The bicycle according to claim 1, wherein the torque sensor (106) is fastened to the standard bottom bracket shell (101) by means of the International Standard Chain Guide Mount (ISCG).

4. The bicycle according to any one of the preceding claims, wherein a longitudinal axis of the crankshaft (2; 134) coincides with a central axis of the gear mechanism.

5. The bicycle according to claim 1 or to any one of claims 3 to 4, wherein the torque sensor (106) has a sleeve (106a) arranged approximately concentrically to the crankshaft (134), to which a strain gauge or a piezo element is fastened, wherein the sleeve (106a) is fastened to the standard bottom bracket shell (101) by means of the International Standard Chain Guide Mount (ISCG).

6. The bicycle according to any one of the preceding claims, wherein the gear mechanism is a planetary gear (4, 5, 6, 8; 102, 103, 109, 111) with an annulus gear (6; 103), a sun gear (8; 102), a planet carrier (4; 109), and planets (5; 111) mounted thereon, and wherein the driven gear (7; 108) is fastened to the annulus gear (6; 103).

7. The bicycle according to claim 6, wherein the substantially stationary part is the sun gear (8; 102), and wherein the planet carrier (4; 109) is directly or indirectly fastened to the crankshaft (2; 134).

8. The bicycle according to claim 6, wherein the substantially stationary part is the planet carrier, and wherein the sun gear is directly or indirectly fastened to the crankshaft.

9. The bicycle according to claim 1, wherein two cranks (10a, 10b) are fastened to the crankshaft (2), wherein a toothed wheel (7) is arranged therebetween via which the muscle power of the cyclist may be transferred to the drive wheel of the bicycle, with a motor (3) by which, as a function of the total torque of the crankshaft (2), a torque may be transferred to the crankshaft (2), wherein the gear mechanism is a planetary gear having an annulus gear (6), a sun gear (8), a planet carrier (4), and planets (5) mounted thereon, wherein the toothed wheel (7) is fastened to the outer circumference of the annulus gear (6), the planet carrier (4) is fastened to the crankshaft (2), and the sun gear (8) is fastened to the crankcase (1) or to the frame.

10. The bicycle according to claim 1, wherein two cranks are fastened to the crankshaft, wherein a toothed wheel is arranged therebetween via which the muscle power of the cyclist may be transferred to the drive wheel of the bicycle, with a motor by which, as a function of the total torque of the crankshaft, a torque may be transferred to the crankshaft, wherein the gear mechanism is a planetary gear having an annulus gear, a sun gear, a planet carrier, and planets mounted thereon, wherein the toothed wheel is fastened to the outer circumference of the annulus gear, the sun gear is fastened to the crankshaft, and the planet carrier is fastened to the crankcase or to the frame.

11. The bicycle according to claim 9, comprising at least one torque sensor (9) being in operative connection with the crankcase (1) or with the frame and with the sun gear (8), and by which the total torque of the crankshaft (2) may be measured.

12. The bicycle according to claim 10, comprising at least one torque sensor being in operative connection with the crankcase or with the frame and with the planet carrier, and by which the total torque of the crankshaft may be measured.

13. The bicycle according to claim 9 or 11, wherein the sun gear (8) is mounted on the crankshaft (2).

14. The bicycle according to claim 10 or 12, wherein the planet carrier is mounted on the crankshaft.

15. The bicycle according to any one of claims 9 to 14, wherein the toothed wheel (7) and the planetary gear are arranged between the crankcase (1) and a first crank (10a), and wherein the motor (3) is arranged between a second crank (10b) and the crankcase (1).

16. The bicycle according to any one of claims 9 to 15, wherein the motor is an electric motor (3), wherein a housing of the electric motor (3) is fastened to the crankcase (1) or to the frame of the bicycle.

17. The bicycle according to claim 16, wherein a gear mechanism that is accommodated in the housing of the motor (3) is assigned to the motor (3).

## Revendications

1. Bicyclette entraînée par la force musculaire avec une unité d'entraînement ayant un vilebrequin (2 ; 134) logé dans un boîtier de pédalier (1 ; 101) ou dans un cadre, sur lequel vilebrequin sont fixées deux manivelles (10a, 10b ; 107) pour transmettre de la force musculaire d'un cycliste sur une roue d'entraînement de la bicyclette, et ayant une transmission qui est disposée dans le flux de force allant du vilebrequin (2 ; 134) jusqu'à une roue de sortie (7 ; 108) de la transmission reliée à la roue d'entraînement, **caractérisée en ce qu'**une partie essentiellement fixe (8 ; 102) de la transmission pour la détermination d'un couple total du vilebrequin (2 ; 134) à l'aide d'un capteur de couple (9 ; 106) est supportée sur un boîtier de pédalier standard (1 ; 101) qui correspond au standard BSA ou au standard international pour boîtes de pédaliers surdimensionnées (BB30).

2. Bicyclette selon la revendication 1, **caractérisée en ce que** la roue de sortie est une roue dentée (7) ou une roue de chaîne (108) par laquelle une chaîne est connectée à la roue d'entraînement de la bicyclette.

3. Bicyclette selon la revendication 1, **caractérisée en ce que** le capteur de couple (106) est monté sur le boîtier de pédalier standard (101) par le montage dit « International Standard Chain Guide Mount (ISCG) ».

4. Bicyclette selon l'une des revendications précédentes, **caractérisée en ce qu'**un axe longitudinal du vilebrequin (2 ; 134) est concordant avec un axe central de la transmission.

5. Bicyclette selon la revendication 1 ou une des revendications 3 à 4, **caractérisée en ce que** le capteur de couple (106) comprend une douille (106a) disposée approximativement coaxiale par rapport au vilebrequin (134), à laquelle douille est fixée une bande de mesure d'allongement ou un élément piézoélectrique, la douille (106a) étant montée sur le boîtier de pédalier standard (101) par le montage dit « International Standard Chain Guide Mount (ISCG) ».

6. Bicyclette selon l'une des revendications précédentes, **caractérisée en ce que** la transmission est un engrenage planétaire (4, 5, 6, 8 ; 102, 103, 109, 111) avec une roue creuse (6 ; 103), une roue solaire (8 ; 102), un support planétaire (4 ; 109) et des planètes (5 ; 111) supportés là-dessus, la roue de sortie (7 ; 108) étant fixée sur la roue creuse (6 ; 103).

7. Bicyclette selon la revendication 6, **caractérisée en ce que** la partie essentiellement fixe est la roue solaire (8 ; 102) et **en ce que** le support planétaire (4 ; 109) est monté directement ou indirectement sur le vilebrequin.

8. Bicyclette selon la revendication 6, **caractérisée en ce que** la partie essentiellement fixe est le support planétaire et **en ce que** la roue solaire est montée directement ou indirectement sur le vilebrequin.

9. Bicyclette selon la revendication 1, **caractérisée en ce que** deux manivelles (10a, 10b) sont fixées sur le vilebrequin (2), entre lesquelles est fixée une roue dentée (7) par laquelle est transmissible la force musculaire d'un cycliste vers la roue d'entraînement de la bicyclette, avec un moteur (3) via lequel est transmissible, en fonction du couple total du vilebrequin (2), un couple au vilebrequin (2), la transmission étant un engrenage planétaire ayant une roue creuse (6), une roue solaire (8), un support planétaire (4) et les planètes (5) supportés là-dessus, la roue dentée (7) étant montée sur le pourtour extérieur de la roue creuse (6), le support planétaire (4) étant monté sur le vilebrequin (2) et la roue solaire (8) étant montée sur le boîtier de pédalier (1).

10. Bicyclette selon la revendication 1, **caractérisé en ce que** deux manivelles sont fixées sur le vilebrequin, entre lesquelles est fixée une roue dentée par laquelle est transmissible la force musculaire d'un cycliste vers la roue d'entraînement de la bicyclette, avec un moteur via lequel est transmissible, en fonction du couple total du vilebrequin, un couple au vilebrequin, la transmission étant un engrenage planétaire ayant une roue creuse, une roue solaire, un support planétaire et les planètes supportés là-dessus, la roue dentée étant montée sur le pourtour extérieur de la roue creuse, la roue solaire étant montée sur le vilebrequin et le support planétaire étant monté sur le boîtier de pédalier ou sur le cadre.

11. Bicyclette selon la revendication 9, avec au moins un capteur de couple (9) qui est en relation effective avec le boîtier de pédalier (1) ou avec le cadre et avec la roue solaire (8) et par lequel le couple total du vilebrequin (2) peut être capté.

12. Bicyclette selon la revendication 10, avec au moins un capteur de couple qui est en relation effective avec le boîtier de pédalier ou avec le cadre et avec le support planétaire et par lequel le couple total du vilebrequin peut être capté.

13. Bicyclette selon la revendication 9 ou 11, la roue solaire (8) étant supportée sur le vilebrequin (2).

14. Bicyclette selon la revendication 10 ou 12, le support planétaire étant supportée sur le vilebrequin.

15. Bicyclette selon l'une des revendications 9 à 14, **caractérisé en ce que** la roue dentée (7) et l'engrenage planétaire sont disposés entre le boîtier de pédalier (1) et une première manivelle (10a) et **en ce que** le moteur (3) est disposé entre une seconde manivelle (10b) et le boîtier de pédalier (1).

16. Bicyclette selon l'une des revendications 9 à 15, **caractérisé en ce que** le moteur est un moteur électrique (3), un boîtier du moteur électrique (3) étant monté sur le boîtier de pédalier (1) ou sur le cadre.

17. Bicyclette selon la revendication 16, **caractérisé en ce qu'**une transmission est associée au moteur (3), qui est reçue dans le boîtier du moteur (3).
